(19) Europäisches Patentamt

European Patent Office

Office européen des brevets

(11) Veröffentlichungsnummer: **0 394 817 B1**

## (12) EUROPÄISCHE PATENTSCHRIFT

(45) Veröffentlichungstag der Patentschrift: **29.06.94**

(51) Int. Cl.$^5$: **C04B 41/90**

(21) Anmeldenummer: **90107321.3**

(22) Anmeldetag: **18.04.90**

Die Akte enthält technische Angaben, die nach dem Eingang der Anmeldung eingereicht wurden und die nicht in dieser Patentschrift enthalten sind.

(54) Verfahren zur Herstellng von Metall-Keramik-Verbundwerkstoffen.

(30) Priorität: **26.04.89 DE 3914010**

(43) Veröffentlichungstag der Anmeldung:
**31.10.90 Patentblatt 90/44**

(45) Bekanntmachung des Hinweises auf die
Patenterteilung:
**29.06.94 Patentblatt 94/26**

(84) Benannte Vertragsstaaten:
**AT BE CH DE ES FR GB GR IT LI LU NL SE**

(56) Entgegenhaltungen:
EP-A- 0 034 329        EP-A- 0 256 963
WO-A-89/07985        DE-A- 2 402 872
DE-A- 3 543 342        DE-A- 3 616 578
DE-A- 3 707 396

CHEMICAL ABSTRACTS, vol. 103, no. 16, Oktober 1985 Columbus, Ohio, USA Seite285; ref. no. 127989E & JP-A-6079945(Daido Steel Co, Ltd)(07.05.1985)

(73) Patentinhaber: **VAW Aluminium AG**
**Georg-von-Boeselager-Strasse 25**
**D-53117 Bonn(DE)**

(72) Erfinder: **Schultze, Dr. Werner**
**Brüsseler Str. 60 a**
**D- 5300 Bonn 1(DE)**
Erfinder: **Schindler, Dr. Stefan**
**Virnebergstr. 32**
**D-5342 Rheinbreitbach(DE)**
Erfinder: **Deisenroth, Friedrich-Ulf**
**Auf der Hardt 33-35**
**D-5204 Lohmar 1(DE)**

(74) Vertreter: **Müller-Wolff, Thomas**
**HARWARDT NEUMANN,**
**Patent- und Rechtsanwälte,**
**Postfach 14 55**
**D-53704 Siegburg (DE)**

**Beschreibung**

Die Erfindung betrifft ein Verfahren zur Herstellung von Metall-Keramik-Verbundwerkstoffen, wobei keramische Werkstoffe mit Metallschmelzen infiltriert werden.

Aus der DE-A-36 16 578 ist ein Aluminiumoxyd-Verbundkörper und ein Verfahren zu seiner Herstellung bekannt, bei dem einr poröse Matrix in einen geformten Glaskörper eingeschlossen und dann in eine Aluminiumschmelze eingetaucht wird. Durch den Druck der Aluminiumschmelze wird der Glaskörper zerstört und die poröse Matrix mit Aluminium infiltriert. Der resultierende Aluminiumoxyd-Verbundkörper besteht aus 76 Gew.-% Aluminiumoxyd, 16 Gew.-% Aluminium und 8 Gew.-% Silizium.

Aus DE-A-24 02 872 ist ein Verfahren zur Herstellung von mit Metall imprägniertem keramischen Material bekannt, bei dem das Material in evakuierten Behälter eingeschlossen wird und der Behälter in ein geschmolzenes Metallbad eingetaucht wird. Das keramische Material kann aus der Gruppe von gesintertem Siliziumnitrid, gesintertem Aluminiumoxyd und Graphit ausgewählt werden, während das geschmolzene Metall aus der Gruppe von Aluminiumlegierungen, Magnesiumlegierungen und Silberlegierungen gewählt wird. Die Porosität des gesinterten Aluminiumoxyds beträgt 22,9 %. Der Grad der Metallimprägnierung beträgt bei der Infiltration von Aluminiumoxyd mit Aluminium etwa 99 %.

Aus JP 61/163224 (Sumitomo Electric Industries) vom 23. Juli 1986 ist es bekannt, einen Keramikkörper von 85-90 % Porosität mit Aluminiumschmelze unter Druck zu infiltrieren.

Ferner ist es aus der GB 21 48 270 (British Ceramic Research Assoc.) vom 30. Mai 1985 bekannt, Cermets dadurch herzustellen, daß man eine poröse SiC-Keramik mit einer Porosität von 39 % mit geschmolzenem Aluminium bei 700 $^\circ$C und einen Druck von 6,72 kpsi infiltriert.

Weitere Cermets sind im tschechischen Patent CS 20 61 32 vom 01. Oktober 1983 beschrieben. Hier werden durch Evakuierung des porösen keramischen Werkstoffs aus 95-90 % $Al_2O_3$, Rest $SiO_2$ durch Infiltrierung mit Aluminium oder Aluminiumverbindungen bei Temperaturen von 700-900 $^\circ$C unter Inertgas und einem Druck von mehr als 1 MPa hergestellt. Der keramische Formkörper hat vor der Infiltrierung eine Porosität von 41 %.

Im Stand der Technik werden daher hochporöse keramische Werkstoffe mit einer Metallschmelze infiltriert, so daß das daraus hergestellte Produkt überwiegend eine Metallstruktur aufweist. Dieser Metall-Keramik-Werkstoff ist in seinen Eigenschaften weitgehend metallischer Natur, so daß die Anforderung an Härte, Temperaturbeständigkeit und Verschleißerhalten weit unterhalb derjenigen Werte der reinkeramischen Werkstoffe liegen.

Aufgabe der vorliegenden Erfindung ist es, die Eigenschaften der keramischen Werkstoffe hinsichtlich Biegefestigkeit, Zähigkeit, E-Modul, Härte und Verschleißfestigkeit zu verbessern unter Beibehaltung bzw. Steigerung der im Vergleich zu den metallischen Werkstoffen überlegenen Eigenschaften wie Härte, Temperaturverhalten und Verschleißfestigkeit.

Die Aufgabe wird durch die im Hauptanspruch angegebenen Merkmale gelöst. Weitere bevorzugte Verfahrensbedingungen sind den Unteransprüchen zu entnehmen.

Erfindungsgemäß sind die keramischen Werkstoffe aus mehreren Schichten aufgebaut, wobei die Schichtdicke zwischen 10 und 150 $\mu$m und der mittleren Porenradius zwischen 100-1000 nm bei einer offenen Porosität von 5-14 % und einer Gesamtporosität von 5-30 % liegt, und die Metallschmelze in das Porenvolumen bis auf ein Restvolumen von 0,1-10 %, bezogen auf die Ausgangsporosität, gefüllt wird.

Es ist besonders vorteilhaft, daß der poröse keramische Werkstoff durch Spritzen von keramischen Partikeln auf einen Grundkörper in einem flüssigkeitstabilisierten Plasmastrahl hergestellt wird.

Nach einer bevorzugten Verfahrensvariante weisen die Partikel im Ausgangszustand einen mittleren Durchmesser von $d_{50}$ = 20-180 $\mu$m auf und nach dem Aufspritzen auf den Grundkörper werden sie zu länglichen Partikeln mit einem Formfaktor größer 5 abgeflacht.

Vorzugsweise wird der keramische Werkstoff während des Plasmaspritzens auf einer Temperatur zwischen 100-500 $^\circ$C gehalten. Ferner kann der keramische Werkstoff vor der Infiltration auf eine Temperatur aufgeheizt werden, die oberhalb der Temperatur der Metallschmelze liegt.

Es hat sich gezeigt, daß die Temperatur der Metallschmelze zweckmäßigerweise 100-200 $^\circ$C über dem Schmelzpunkt des Metalls bzw. der Metallegierung liegen muß. Ferner ist es vorteilhaft, wenn der Metallschmelze benetzungsfördernde und/oder viskositätsenkende Stoffe zugegeben werden. So werden zur Erniedrigung der Viskosität und zur Verbesserung des Benetzungsverhaltens bei Aluminium-Legierungen folgende Stoffe zugesetzt:

Wismuth, Antimon, Strontium, Beryllium, Natrium, Kalium, Lithium.

Während des Aufspritzens von keramischen Partikeln auf einen Grundkörper wird vorteilhafterweise die Partikelgröße in einem flüssigkeitstabilisierten Plasmastrahl variiert und zwar von einem Anfangswert von $d_{50}$ = 20 $\mu$m auf einen Endwert von $d_{50}$ größer 100 $\mu$m und umgekehrt.

In einer besonders bevorzugten Verfahrensvariante wird der durch Plasmaspritzen hergestellte keramische Werkstoff in eine geschlossene, auf die Schmelztemperatur des Metalls aufgeheizte Form eingegeben, evakuiert und von einer unter Druck stehenden Metallschmelze innerhalb von 50-60 Sek. infiltriert. Ferner ist es vorteilhaft, wenn die Metallschmelze aus Aluminium oder einer Aluminiunlegierung besteht und der Verbundkörper nach der Infiltration mit einer Geschwindigkeit von 200 °C/h abgekühlt wird.

Bei einer Infiltration mit Stahl oder Grauguß wird der Verbundkörper nach der Infiltration mit der Metallschmelze bei einer Geschwindigkeit von vorzugsweise 100 °C/h abgekühlt.

Ferner kann nach Beendigung des Spritzvorganges zur Herstellung des Verbundkörpers mindestens eine Lage metallischer Werkstoff auf den keramischen Grundwerkstoff aufgetragen werden. Dann wird durch Erhöhung der Temperatur des keramischen Körpers das aufgetragene Metall geschmolzen und in den porösen keramischen Werkstoff infiltriert.

Eine bevorzugte Anwendung des erfindungsgemäßen Verfahrens zur Steuerung der Werkstoffeigenschaften erfolgt durch Einstellung der Porosität und des Volumenverhältnisses Metall/Keramik des Verbundkörpers. Als vorteilhafte Parameter der Werkstoffeigenschaften sind hier die Steuerung von Biegefestigkeit, Zähigkeit, E-Modul und Härte des Verbundkörpers zu nennen.

Es hat sich gezeigt, daß bei einem Mehrschichtenaufbau der Keramik und einer Gesamtporosität von 5-30 % die Infiltrierung mit Metallschmelze die gewünschte Kombination der Eigenschaften ermöglicht. Die Gesamtporosität ist dabei die Ausgangsporosität der Keramik vor der Infiltration mit Metallschmelze. Entscheidend ist dabei der mittlere Porenradius von 100-1000 nm, der mit Hilfe eines Quecksilberporosimeters von Carlo-Erba ermittelt wird.

Durch den Mehrschichtenaufbau wird eine Porennetzstruktur des keramischen Werkstoffs erreicht, die sich in besonders günstiger Weise mit Metallschmelze infiltrieren läßt. Die Porennetzstruktur ist erfindungsgemäß steuerbar durch die verwendete Partikelgröße des keramischen Materials sowie durch die Auftragsgeschwindigkeit im flüssigkeitsstabilisierten Plasmastrahl.

Für die Ausbildung einer gleichmäßigen Porenstruktur hat es sich als zweckmäßig erwiesen, den Keramikwerkstoff während des Plasmaspritzens auf einer Temperatur zwischen 100 und 500 °C zu halten. Die Abkühlung der infiltrierten Keramik muß innerhalb enger Grenzen mit 100 °C/h bei Grauguß und Stahl sowie 200 °C/h bei Aluminiumlegierungen erfolgen, um ein homogenes, spannungsfreies Metallgefüge zu erzeugen.

Anhand von Versuchen hat sich herausgestellt, daß bei besonders feiner Porennetzstruktur eine Erniedrigung der Viskosität der Metallschmelze für die Benetzung der Keramik vorteilhaft ist. Dies wird erfindungsgemäß durch die Zugabe spezieller Legierungselemente erreicht, die es ermöglichen, daß die Metallschmelze auch in das Innere des porösen Keramikwerkstoffs eindringt.

Für bestimmte Anwendungsfälle z.B. die Anbindung an Metallstrukturen wie geschweißte oder gelötete Keramik/Metallkonstruktionen hat es sich als nützlich erwiesen, daß der keramische Werkstoff eine von innen nach außen zunehmende Porosität und damit einen steigenden Metallanteil aufweist. Ein derart aufgebautes Porennetzwerk wird als "Gradienten-Struktur" bezeichnet. Die metallischen Eigenschaften überwiegen an der Außenzone des Verbundwerkstoffs, während im Innern keramische Eigenschaften vorherrschen.

Erzielt wird diese Gradienten-Struktur durch eine Variation der Partikelgröße beim Aufspritzen auf den Grundkörper in einem flüssigkeitsstabilisierten Plasmastrahl. Man beginnt beispielsweise mit sehr feinem Pulver mit einem $d_{50}$ von 20 $\mu$m und steigert die Partikelgröße in den Außenschichten des keramischen Werkstoffs auf einen $d_{50}$-Wert >100 $\mu$m. Es ist aber auch die umgekehrte Verfahrensweise möglich, je nach dem, wo die der Metalloberfläche zugewandte Seite liegt. Wesentlich ist, daß die der Metallkonstruktion nächstliegende Fläche des Keramikverbundkörpers die Struktur aufweist, die aus dem Pulver mit dem großen Partikel durchmesser erzeugt worden ist.

Im folgenden wird die Erfindung anhand von zwei Ausführungsbeispielen und zwei Vergleichsbeispielen näher erläutert. Zunächst werden die Eigenschaften der durch Plasmaspritzen hergestellten vollkeramischen Werkstoffe mit denen der metallinfiltrierten Keramik-Verbundwerkstoffe (CMC = Ceramic Metall Compound) verglichen. Daraus ergibt sich, daß die neuen CMCWerkstoffe mit einem Restporenvolumen von 0,1-10 % der Ausgangsporosität deutliche Vorteile bringen.

Ergänzt wird die Tabelle um die Eigenschaftswerte eines erfindungsgemäßen Metall-Keramik-Verbundwerkstoffs mit Gradienten-Struktur. Hierbei zeigt sich, daß die Werkstoffeigenschaften nochmals eine deutliche Steigerung erfahren im Vergleich zu den verbesserten erfindungsgemäßen Verbundwerkstoffen ohne Gradienten-Struktur.

Die Werte für Dichte und Porosität sind nach DIN 51056, die Werte für Härte nach Vickers gemäß DIN 50133 bestimmt worden. Es werden zunächst aus den Werkstoffen $Al_2O_3$ und $Al_2TiO_5$ Platten durch Plasmaspritzen hergestellt, wobei die Partikelgröße $d_{50}$ zwischen 60-70 $\mu$m lag und die Auftragsgeschwindigkeit beim Aufspritzen im Plasmastrahl 300 m/s betrug. Die Dicke der einzelnen Auftragsschichten betrug 100 $\mu$m, die erzielte Gesamtporosität lag beim Aluminiumoxid bei 18 % und beim Aluminiumtitanat bei 15 %. Der Formfaktor der aufgespritzten Partikel betrug 1:5 bis 1:20 beim Aluminiumoxid und 1:15 bis 1:25 beim Aluminiumtitanat.

Aus diesen Platten wurden Prüfteile für die Ermittlung der Materialkennwerte in den Abmessungen von 100 x 100 x 30 mm geschnitten, auf eine Temperatur von 1000 °C vorgeheizt und mit einer Metallschmelze aus einer AlSi10Mg-Legierung bei 750 °C mit einem $\Delta$p = 35 bar innerhalb einer Zeit von 15 sec. infiltriert. Die Abkühlungsgeschwindigkeit nach der Infiltration betrug 200 °C pro Stunde in einem programmgesteuerten Ofen, so daß die Teile innerhalb von 5 Stunden auf Raumtemperatur abgekühlt waren. Danach wurde das Restporenvolumen bei der Aluminiumoxidkeramik mit 0,5 %, bezogen auf die Ausgangsprositat und beim Aluminiumtitanat mit 0,7% ermittelt.

Ein weiterer Versuchskörper wird mit der erfindungsgemäßen Gradienten-Struktur hergestellt. Die Herstellungsbedingungen sind die gleichen wie oben angegeben, wobei jedoch zwei unterschiedliche Partikelgrößen mit einem $d_{50}$-Wert von 40 bzw. 100 $\mu$m durch zwei Kanäle aufgetragen wurden. Dabei wird der Partikelstrom mit dem $d_{50}$-Wert = 40 $\mu$m kontinuierlich von 0 auf 25 kg/h gesteigert, während der Partikelstrom mit dem $d_{50}$-Wert = 100 $\mu$m im selben Maße von 25 kg/h auf 0 zurückgefahren wird. Die Umschaltung von dem einen Kanal auf den anderen Kanal erfolgt innerhalb einer Stunde. Die dabei erzielten einzelnen Schichtdicken liegen zwischen 80 und 100 $\mu$m, die Gesamtporosität bei 12 %. Nach der Infiltration mit einer AlSi10Mg-Legierung wies der Versuchskörper ein Restporenvolumen von 0,6 %, bezogen auf die Ausgangsporosität auf.

Die an den Versuchskörpern gemessenen Werte werden in der Tab. 1 zusammengefaßt. Die Werte für Biegefestigkeit (4-Punkt-Biegeeinrichtung), E-Modul und KIC wurden an Standard-Biegeproben in den Abmessungen 3,5 x 4,5 x 45 mm ermittelt. Als Vergleich sind die Werkstoffdaten eines herkömmlich hergestellten gesinterten Vollkeramik-Körpers aus $Al_2O_3$ angegeben (Literaturwerte). Es zeigt sich, daß der erfindungsgemäß hergestellte Metall-Keramik-Verbundwerkstoff sehr gute Werte für die Biegefestigkeit, die Rißzähigkeit (KIC) und die Härte aufweist und damit hinsichtlich der Kombination der Materialkennwerte wie auch der einzelnen Kennwerte eine deutliche Verbesserung gegenüber herkömmlichen Werkstoffen darstellt.

| Kennwerte | | Al₂O₃ gesintert* | Al₂O₃ gespritzt | Al₂TiO₅ gespritzt | Al₂O₃ gespritzt infiltriert = CMC | Al₂TiO₅ gespritzt infiltriert = CMC | Al₂O₃ mit Gradientenstruktur gespritzt und infiltriert = CMC |
|---|---|---|---|---|---|---|---|
| Dichte | g/cm³ | 3,95 | 3,3 | 3,4 | 3,6 | 3,7 | 3,6-3,7 |
| Biegefestigkeit | M Pa (4-Punkt) | 450 | 25 | 45 | 510 ± 50 | 490 ± 80 | 550 ± 40 |
| E-Modul | GPa | 400 | 22 | 13 | 250 ± 80 | 300 ± 100 | 350 ± 50 |
| KIC | $MPa\sqrt{m}$ | 3-5 | - | - | 10-12 | 13-15 | 15-18 |
| Härte | Vickers (HV$_{200/20}$) | 1800 | 920 ± 250 | - | 1600 ± 300 | 1800 ± 300 | 1750 ± 300 |

Tab. 1

\* Literaturwerte

## Patentansprüche

1. Verfahren zur Herstellung von Metall-Keramik-Verbundwerkstoffen, wobei keramische Werkstoffe mit Metallschmelzen infiltriert werden,

5

EP 0 394 817 B1

dadurch gekennzeichnet,
daß die keramischen Werkstoffe aus mehreren Schichten aufgebaut werden, wobei die Schichtdicke zwischen 10 und 150 $\mu$m und der mittleren Porenradius zwischen 100-1000 nm bei einer offenen Porosität von 5-14 % und einer Gesamtporosität von 5-30 % liegt, und die Metallschmelze in das Porenvolumen bis auf ein Restvolumen von 0,1-10 %, bezogen auf die Ausgangsporosität, gefüllt wird.

2. Verfahren nach Anspruch 1, dadurch gekennzeichnet, daß der poröse keramische Werkstoff durch Spritzen von keramischen Partikeln auf einen Grundkörper in einem flüssigkeitstabilisierten Plasmastrahl hergestellt wird.

3. Verfahren nach einem der vorhergehenden Ansprüche, dadurch gekennzeichnet, daß die Partikel im Ausgangszustand einen mittleren Durchmesser von $d_{50}$ = 20-180 $\mu$m aufweisen und nach dem Aufspritzen auf den Grundkörper zu länglichen Partikeln mit einem Formfaktor größer 5 abgeflacht werden.

4. Verfahren nach einem der vorhergehenden Ansprüche, dadurch gekennzeichnet, daß der keramische Werkstoff während des Plasmaspritzens auf einer Temperatur zwischen 100-500 °C gehalten wird.

5. Verfahren nach einem der vorhergehenden Ansprüche, dadurch gekennzeichnet, daß der keramische Werkstoff vor der Infiltration auf eine Temperatur vorgeheizt wird, die oberhalb der Temperatur der Metallschmelze liegt.

6. Verfahren nach einem der vorhergehenden Ansprüche, dadurch gekennzeichnet, daß die Temperatur der Metallschmelze 100-200 °C über dem Schmelzpunkt des Metalls bzw. der Metallegierung liegt.

7. Verfahren nach einem der vorhergehenden Ansprüche, dadurch gekennzeichnet, daß der Metallschmelze benetzungsfördernde und/oder viskositätsenkende Stoffe zugegeben werden.

8. Verfahren nach einem der vorhergehenden Ansprüche, dadurch gekennzeichnet, daß zur Erniedrigung der Viskosität und zur Verbesserung des Benetzungsverhaltens bei Al-Legierungen folgende Stoffe zugesetzt werden:
Wismuth, Antimon, Strontium, Beryllium, Natrium, Kalium, Lithium.

9. Verfahren nach einem der vorhergehenden Ansprüche, dadurch gekennzeichnet, daß die Partikelgröße während des Aufspritzens von keramischen Partikeln auf einen Grundkörper in einem flüssigkeitsstabilisierten Plasmastrahl variiert wird und zwar von einem Anfangswert von $d_{50}$ = 20 $\mu$m auf einen Endwert von $d_{50}$ größer 100 $\mu$m und umgekehrt.

10. Verfahren nach einem der vorhergehenden Ansprüche, dadurch gekennzeichnet, daß der durch Plasmaspritzen hergestellte keramische Werkstoff in eine geschlossene auf die Schmelztemperatur des Metalls aufgeheizte Form eingegeben, evakuiert und von einer unter Druck stehenden Metallschmelze innerhalb von 5-60 sec infiltriert wird.

11. Verfahren nach einem der vorhergehenden Ansprüche, dadurch gekennzeichnet, daß die Metallschmelze aus Aluminium oder einer Al-Legierung besteht und der Verbundkörper nach der Infiltration mit einer Geschwindigkeit von 200 °C/h abgekühlt wird.

12. Verfahren nach einem der vorhergehenden Ansprüche, dadurch gekennzeichnet, daß die Metallschmelze aus Stahl oder Grauguß besteht und die Verbundkörper nach der Infiltration mit einer Geschwindigkeit von 100 °C/h abgekühlt wird.

13. Verfahren nach den Ansprüchen 1 bis 9, dadurch gekennzeichnet, daß nach Beendigung des Spritzvorganges zur Herstellung des Verbundkörpers mindestens eine Lage metallischer Werkstoff auf den keramischen Grundwerkstoff aufgetragen wird und dann durch Erhöhung der Temperatur des keramischen Körpers das aufgetragene Metall geschmolzen und in den porösen keramischen Werkstoff infiltriert wird.

6

**14.** Anwendung des Verfahrens nach den Ansprüchen 1 bis 13 zur Steuerung der Werkstoffeigenschaften durch Einstellung der Porosität und des Volumenverhältnisses Metall/Keramik des Verbundkörpers.

**15.** Anwendung des Verfahren nach den Ansprüchen 1 bis 14 zur Steuerung von Biegefestigkeit, Zähigkeit, E-Modul und Härte des Verbundkörpers.

**Claims**

**1.** A process for the production of metal-ceramic composites, wherein ceramic materials are infiltrated with molten metal,
characterised in that
the ceramic materials are built up of several layers, wherein the layer thickness is between 10 and 150$\mu$m and the average pore radius between 100-1,000nm at an open porosity of 5-14% and a total porosity of 5-30%, and the molten metal fills the volume of pores up to a residual volume of 0.1 -10% relative to the initial porosity.

**2.** A process according to claim 1, characterised in that the porous ceramic material is prepared by spraying ceramic particles on to a backing material in a liquid-stabilised plasma jet.

**3.** A process according to one of the preceding claims, characterised in that in their initial state the particles have an average diameter $d_{50}$ = 20-180$\mu$m and, after spraying on to the backing material, they are flattened into oblong particles having a shape factor greater than 5.

**4.** A process according to one of the preceding claims, characterised in that ceramic material is maintained at a temperature of between 100 and 500°C during the plasma spraying.

**5.** A process according to one of the preceding claims, characterised in that prior to infiltration the ceramic material is heated to a temperature in excess of the temperature of the molten metal.

**6.** A process according to one of the preceding claims, characterised in that the temperature of the molten metal is 100-200°C above the melting point of the metal or metal alloy.

**7.** A process according to one of the preceding claims, characterised in that substances which promote wetting and/or lower viscosity are added to the molten metal.

**8.** A process according to one of the preceding claims, characterised in that the following substances are added in order to lower viscosity and to improve wetting behaviour in aluminium alloys:
bismuth, antimony, strontium, beryllium, sodium, potassium, lithium.

**9.** A process according to one of the preceding claims, characterised in that the particle size during the spraying of the ceramic particles on to a backing material in a liquid-stabilised plasma jet is varied, namely from an initial value of $d_{50}$ = 20$\mu$m to a final value for $d_{50}$ in excess of 100$\mu$m, and back again.

**10.** A process according to one of the preceding claims, characterised in that the ceramic material prepared by plasma spraying is put into a closed mould which has been heated up to the melting temperature of the metal, evacuated and infiltrated within a period of 50-60 seconds by a molten metal mass, the latter under pressure.

**11.** A process according to one of the preceding claims, characterised in that the molten metal consists of aluminium or an aluminium alloy and the composite present after infiltration is cooled down at a rate of 200°C/h.

**12.** A process according to one of the preceding claims, characterised in that the molten metal consists of steel or grey cast iron and the composite present after infiltration is cooled down at a rate of 100°C/h.

**13.** A process according to claims 1 to 9, characterised in that after completion of the spraying procedure for preparing the composite, at least one layer of metallic material is applied to the ceramic backing

EP 0 394 817 B1

material and then by raising the temperature of the ceramic body the applied metal is melted and infiltrated into the porous ceramic material.

14. Application of the process according to claims 1 to 13 for the control of material properties by adjusting the porosity and the metal/ceramic volume ratio of the composite.

15. Application of the process according to claims 1 to 14 for the control of the bending strength, toughness, modulus of elasticity and hardness of the composite.

**Revendications**

1. Procédé de fabrication de matériaux composites métal-céramique, les matériaux céramiques étant imprégnés de masses métalliques fondues caractérisé en ce que les matériaux céramiques sont constitués de plusieurs couches, l'épaisseur de couche est comprise entre 10 et 150 $\mu$m et le rayon de pore moyen est compris entre 100 et 1000 nm pour une porosité ouverte de 5-14 % et une porosité totale de 5-30 % et la masse métallique fondue pénètre dans le volume des pores jusqu'à un volume résiduel de 0,1-10 %, rapporté à la porosité initiale.

2. Procédé selon la revendication 1, caractérisé en ce que le matériau céramique poreux est préparé par pulvérisation de particules céramiques sur un corps de base dans un jet de plasma stabilisé par un liquide.

3. Procédé selon l'une des revendications précédentes caractérisé en ce que les particules à l'état initial présentent un diamètre moyen de $d_{50}$ = 20-180 $\mu$m et après la pulvérisation sur le corps de base elles sont aplaties en particules allongées avec un facteur de forme supérieur à 5.

4. Procédé selon l'une des revendications précédentes, caractérisé en ce que le matériau céramique, pendant la pulvérisation par plasma est maintenu à une température comprise entre 100 et 500°C.

5. Procédé selon l'une des revendications précédentes, caractérisé en ce que le matériau céramique est préchauffé avant l'imprégnation à une température qui se trouve au-dessus de la température de la masse de métal fondue.

6. Procédé selon l'une des revendications précédentes, caractérisé en ce que la température de la masse métallique fondue se situe 100-200°C au-dessus du point de fusion du métal ou de l'alliage métallique.

7. Procédé selon l'une des revendications précédentes caractérisé en ce qu'on ajoute à la masse métallique fondue des substances favorisant le mouillage et/ou diminuant la viscosité.

8. Procédé selon l'une des revendications précédentes caractérisé en ce que pour abaisser la viscosité et pour améliorer le mouillage par les alliages de Al on ajoute les substances suivantes : bismuth, antimoine, strontium, béryllium, sodium, potassium, lithium.

9. Procédé selon l'une des revendications précédentes, caractérisé en ce que la taille de particules pendant la pulvérisation de particules céramiques sur un corps de base est modifiée dans un jet de plasma stabilisé par un liquide et ce d'une valeur initiale de $d_{50}$ = 20 $\mu$m à une valeur finale de $d_{50}$ supérieure à 100 $\mu$m et inversement.

10. Procédé selon l'une des revendications précédentes, caractérisé en ce que le matériau céramique préparé par pulvérisation par plasma est placé dans un moule fermé chauffé à la température de fusion du métal, on met sous vide et on imprègne par une masse métallique fondue sous pression en 5 à 60 sec.

11. Procédé selon l'une des revendications précédentes caractérisé en ce que la masse métallique fondue est en aluminium ou en alliage d'aluminium et qu'on refroidit le corps composite après l'imprégnation à une vitesse de 200°C/h.

8

**12.** Procédé selon l'une des revendications précédentes, caractérisé en ce que la masse métallique fondue est composée d'acier ou de fonte grise et que les corps composites après l'imprégnation sont refroidis à une vitesse de 100°C/h.

**13.** Procédé selon les revendications 1 à 9 caractérisé en ce qu'à la fin du processus de pulvérisation pour réaliser le corps composite on dépose au moins une couche de matériau métallique sur un matériau de base en céramique et par augmentation de la température du matériau céramique le métal déposé est fondu et infiltré dans le matériau céramique poreux.

**14.** Utilisation du procédé selon les revendications 1 à 13 pour modifier les propriétés de matériau par réglage de la porosité et de la proportion volumique métal/céramique du corps composite.

**15.** Utilisation du procédé selon les revendications 1 à 14 pour modifier la résistance à la flexion, la rigidité, le module E et la dureté du corps composite.